## Europäisches Patentamt

## European Patent Office

## Office européen des brevets

(19)

(11) Veröffentlichungsnummer: **0 166 114**
**B1**

(12) **EUROPÄISCHE PATENTSCHRIFT**

(45) Veröffentlichungstag der Patentschrift:
14.09.88

(51) Int. Cl.⁴: **H 02 K 1/18**

(21) Anmeldenummer: **85105176.3**

(22) Anmeldetag: **27.04.85**

(54) Statorblechpaketbefestigung in einer elektrischen Maschine.

(30) Priorität: **12.06.84 CH 2824/84**

(43) Veröffentlichungstag der Anmeldung:
**02.01.86 Patentblatt 86/1**

(45) Bekanntmachung des Hinweises auf die Patenterteilung:
**14.09.88 Patentblatt 88/37**

(84) Benannte Vertragsstaaten:
**AT CH DE FR GB IT LI NL SE**

(56) Entgegenhaltungen:
**CH - A - 393 502**
**DE - C - 532 315**
**FR - A - 694 776**
**GB - A - 684 929**
**US - A - 2 424 299**

**Die Akte enthält technische Angaben, die nach dem Eingang der Anmeldung eingereicht wurden und die nicht in dieser Patentschrift enthalten sind.**

(73) Patentinhaber: **BBC Brown Boveri AG, Haselstrasse, CH-5401 Baden (CH)**

(72) Erfinder: **Zimmermann, Hans, Wiesenstrasse 3, CH-8617 Mönchaltorf (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine horizontalachsige elektrische Maschine gemäss Gattungsbegriff des Patentanspruchs 1. Mit diesem Gattungsbegriff nimmt die Erfindung Bezug auf einen Stand der Technik, wie er sich beispielsweise aus der DE-A 532 315 ergibt.

In dieser Druckschrift ist eine horizontalachsige Maschine mit einem in Horizontalrichtung geteilten Gehäuse und einem einteiligen Statorblechpaket beschrieben. Das Statorblechpaket ist aus mehreren das wirksame Eisen umgebenden Einzelringen und einer Vielzahl parallel zur Maschinenachse verlaufender Verbindungsstege zusammengesetzt. In der Höhe der horizontalen Symmetrieachse sind in den Einzelringen Bohrungen vorgesehen, durch welche Schraubenbolzen geführt werden, die in Löcher von Platten des Gehäuseunterteils bzw. der Maschinenfüsse eingreifen und diese an den Ringen befestigen.

In dem Prospekt der Firma Brown Boveri & Cie. «Luftgekühlte Turbogeneratoren», ZKN/G248, undatiert, ist eine horizontalachsige elektrische Maschine dargestellt, bei der das Statorblechpaket in Ausnehmungen von annähernd zehn vertikal angeordneten Tragplatten gelagert ist, wobei die Ausnehmungen die Form eines regelmässigen Mehrecks aufweisen, die der äusseren prismatischen Form des Statorblechpaketes entsprechen. Als Befestigungselement sind Keile verwendet, die jedoch nur im Bereich des Gehäuseunterteiles angeordnet sind. Die Tragplatten sind im unteren Teil rechteckig ausgebildet und übernehmen die Tragfunktion des Statorkörpers. Ausgehend vom Stand der Technik nach der DE-A 532 315 liegt der Erfindung die Aufgabe zugrunde, eine horizontalachsige elektrische Maschine anzugeben, bei der auftretende Schwingungen und thermische Spannungen in ihren unerwünschten Auswirkungen verringert sind und die bei der Montage des Stators vorzunehmenden Justier- und Schweissarbeiten einfach durchführbar sind.

Die Lösung dieser Aufgabe erfolgt durch die im Patentanspruch 1 gekennzeichnete Erfindung.

Die Erfindung weist folgende Vorteile auf:

– Radiale thermische Dehnungen des Statorblechpaketes im Betriebszustand der elektrischen Maschine ergeben in den ringförmigen Tragplatten annähernd symmetrische Zugspannungen und gleichmässig verteilte radiale Druckkräfte in den Befestigungskeilen.

– Axiale thermische Dehnungen des Statorblechpaketes und die daraus resultierenden Spannungen werden nur auf die Erweiterungen der ringförmigen Tragplatten übertragen und sie werden durch geringfügiges Verformen der Erweiterungen ausgeglichen.

– Die Abstützung der ringförmigen Tragplatten im Gehäuseunterteil, lediglich in den Bereichen ihrer horizontalen Symmetrieebene, erlaubt eine exakte Vorausberechnung der Spannungen, die in diesen Konstruktionsteilen auftreten.

– Die relativ hohen radialen Schwingungen im Statorblechpaket wirken nur in der horizontalen Achsebene und werden durch die Nachgiebigkeit des Gehäuses stark reduziert, so dass Schwingungen im Maschinenfundament stark vermindert werden.

– Die relativ kleinen tangentialen Blechkörperschwingungen werden durch das Gehäuse ebenfalls reduziert.

Die Erfindung sowie deren Weiterbildungen werden nachstehend anhand eines in der Zeichnung dargestellten Ausführungsbeispiels näher erläutert. In der Zeichnung zeigt

Fig. 1 einen Vertikalschnitt durch eine horizontalachsige Maschine,

Fig. 2 eine vergrösserte Darstellung der Anordnung eines Befestigungskeiles gemäss Fig. 1,

Fig. 3 eine vergrösserte Darstellung des Befestigungsteiles gemäss Fig. 1,

Fig. 4 einen teilweisen Schnitt durch die horizontale Symmetrieebene der elektrischen Maschine,

Fig. 5 einen Vertikalschnitt durch das Befestigungsteil gemäss Fig. 4, und

Fig. 6 einen Vertikalschnitt durch einen Befestigungskeil gemäss Fig. 4.

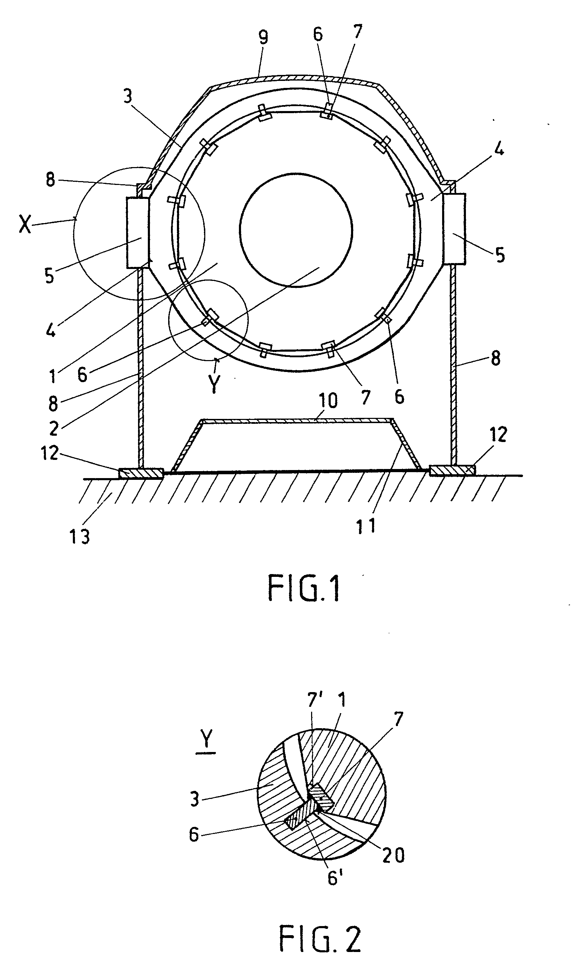

Fig. 1 ist ein Statorblechpaket mit 1, ein Loch für das Rotorteil mit 2 und eine ringförmige Tragplatte mit 3 bezeichnet. Die ringförmige Tragplatte 3 weist beidseits im Bereich ihrer horizontalen Symmetrieebene Erweiterungen 4 auf. Über je ein Befestigungsteil 5, welches gleichzeitig im Bereich der horizontalen Symmetrieebene angeordnet sind, ist die Tragplatte 3 in seinen Erweiterungen 4 mit dem Gehäuseunterteil 8 mechanisch fest verbunden.

In Fig. 1 ist das Gehäuseunter- 8 und -oberteil 9 geschnitten, das Statorblechpaket 1 in Draufsicht und die ringförmige Tragplatte 3 ebenfalls in Draufsicht dargestellt. Die elektrische Maschine stützt sich über Fussplatten 12 auf dem Fundament 13 ab, wobei zur mechanischen Verstärkung schräge Abstützplatten 11 in einem Gehäuseboden 10 angeordnet sind. In Fig. 1 ist ersichtlich, dass das Statorblechpaket 1 lediglich mittels, über seinen gesamten Umfang gleichmässig verteilten Befestigungskeilen 6 in der ringförmigen Tragplatte 3 abgestützt ist und dass der übrige – weitaus grössere Teil des Umfanges des Statorblechpaketes 1 – von der ringförmigen Tragplatte 3 beabstandet ist.

In Fig. 1 ist lediglich eine ringförmige Tragplatte 3 dargestellt. In der elektrischen Maschine gemäss Fig. 1 sind wenigstens zwei parallel zu der Achse der elektrischen Maschine gegenseitig beabstandete Tragplatten 3 vorgesehen und je nach Grösse der elektrischen Maschine können vier bis sechs Tragplatten 3 angeordnet sein.

In Fig. 1 ist gleichfalls ersichtlich, dass die ringförmige Tragplatte 3 nur im Bereich ihrer horizontalen Symmetrieebene mittels der beidseits angeordneten Befestigungsteile 5 mit dem Gehäuseunterteil 8 der elektrischen Maschine verbunden ist und dass zwischen dem äusseren Umfang der Tragplatte 3 und dem Gehäuseunter- 8 und -oberteil 9 ein leerer Raum ist.

Im vorliegenden Ausführungsbeispiel ist der Umfang des Statorblechpaketes 1 mehreckig ausgebildet.

Zur besseren Veranschaulichung ist in Fig. 2 die Keilbefestigung des Statorblechkörpers 1 in der ringförmigen Tragplatte 3 gemäss Fig. 1 vergrössert dargestellt. Es ist erkennbar, dass die Tragplatte 3 in ihrem inneren Umfang Aussparungen 6' für die Keile 6 aufweist, in denen die Keile 6 gelagert sind. In Aussparungen 7' des Statorblechpaketes 1 sind Pressbolzen 7 angeordnet, auf denen sich die Befestigungskeile 6 abstützen. Die Pressbolzen 7 können sich einerseits nur im Bereich der Keile 6 befinden, aus herstellungstechnischen Gründen ist es jedoch zweckmässig, die Aussparungen 7' über die gesamte axiale Länge des Statorblechpaketes vorzusehen, so dass sich ebenfalls die Pressbolzen 7 über die gesamte Länge des Statorblechpaketes erstrecken. Zur Erhöhung der mechanischen Stabilität der Maschinenkonstruktion sind Befestigungskeile 6 und Pressbolzen 7 miteinander mittels der Schweissnähte 20 verbunden.

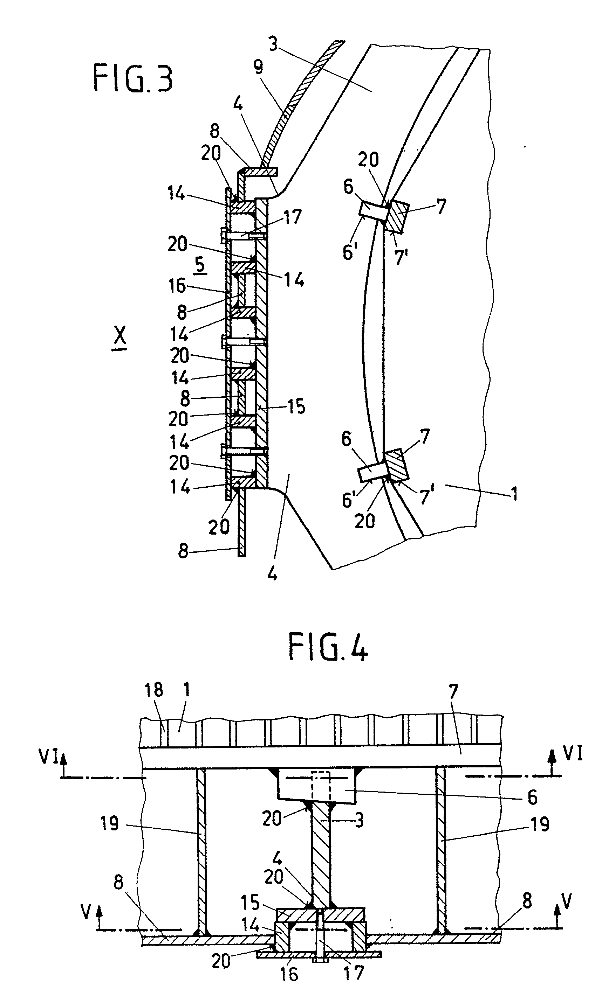

In Fig. 3 ist ein Vertikalschnitt in vergrösserter Darstellung durch das Befestigungsteil 5 und eine teilweise Draufsicht auf die ringförmige Tragplatte 3 und das Statorblechpaket 1 gezeigt. Das Befestigungsteil 5 ist im Gehäuseunterteil 8 angeordnet und besteht aus einer vertikal verlaufenden Befestigungsplatte 15, welche mit der Erweiterung 4 der Tragplatte 3 verschweisst ist. Die Verschweissung ist in Fig. 3 nicht dargestellt. Auf der Befestigungsplatte 15 sind Rohrstücke 14 angebracht, welche einerseits mit der Befestigungsplatte 15 und andererseits mit dem Gehäuseunterteil 8 verschweisst sind. Zum Abschliessen der Rohrstücke 14 nach aussen hin, ist eine Abschlussplatte 16 vorgesehen, welche mittels Schrauben 17 in der Befestigungsplatte 15 befestigt ist. Oberhalb des Befestigungsteiles 5 weist das Gehäuseunterteil 8 einen sockelförmigen Absatz auf, auf dem sich das Gehäuseoberteil 9 abstützt. Der Verbindung zwischen Gehäuseunter- 8 und -oberteil 9 ist in Fig. 3 nur schematisch gezeigt.

Fig. 4 zeigt einen teilweisen Schnitt durch die horizontale Symmetrieebene der elektrischen Maschine im Bereich des Befestigungsteiles 5. Das Statorblechpaket 1 weist radiale Kühlkanäle 19 auf. Der Pressbolzen 7, auf dem sich der Befestigungskeil 6 abstützt, erstreckt sich über die gesamte axiale Länge des Statorblechpaketes. Einerseits ist der Befestigungskeil 6, wie bereits erwähnt, mit dem Pressbolzen 7 und andererseits mit dem Tragring 3 mittels der Schweissnähte 20 verschweisst.

In Fig. 4 ist die Einfügung des Befestigungsteiles 5 in das Gehäuseunterteil 8 gut erkennbar. Es sind senkrechte zum Gehäuseunterteil 8 verfestigende Querwände 19 angebracht, welche, wie in Fig. 4 klar ersichtlich ist, vom Statorblechpaket 1 bzw. von den Pressbolzen beabstandet sind, um eine Berührung der Querwände 19 mit dem Statorblechpaket 1 im Betriebszustand der elektrischen, infolge radialer thermischer Dehnungen des Statorblechpaketes 1 zu vermeiden.

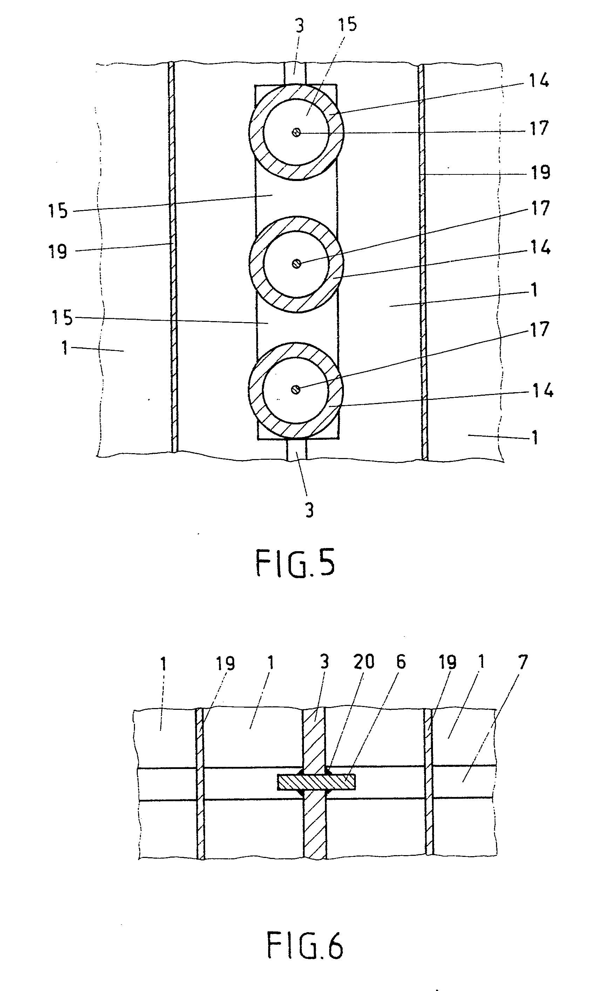

Fig. 5 zeigt einen Vertikalschnitt durch das Befestigungsteil 5 und eine teilweise Draufsicht auf das Statorblechpaket 1 gemäss Fig. 4.

In dem Ausführungsbeispiel gemäss Fig. 5 sind drei Rohrstücke 13 in der Vertikalen auf der Befestigungsplatte 15 angeordnet. Es versteht sich von selbst, dass je nach gewünschter mechanischer Stabilität des Befestigungsteiles 5 weniger oder mehr als drei Rohrstücke 14 auf der Befestigungsplatte 15 angeordnet sein können. In Fig. 5 sind aus Gründen besserer Übersicht die radialen Kühlkanäle 19 im Statorblechpaket 1 nicht eingezeichnet.

Fig. 6 zeigt einen Vertikalschnitt durch einen Befestigungskeil 6 und eine teilweise Draufsicht auf das Statorblechpaket 1 gemäss Fig. 4. Aus Gründen besserer Übersicht sind ebenfalls die radialen Kühlkanäle 19 im Statorblechpaket 1 nicht dargestellt.

**Patentansprüche**

1. Horizontalachsige elektrische Maschine mit einem Statorblechpaket (1), das mittels über seinen gesamten Umfang verteilten Befestigungskeilen (6) in wenigstens zwei senkrechten und gegenseitig beabstandeten ringförmigen Tragplatten (3) verspannt ist, welche Tragplatten ihrerseits im Bereich der horizontalen Symmetrieebene der Maschine über Befestigungsteile (5) mit dem Gehäuseunterteil (8) der Maschine verbunden sind, dadurch gekennzeichnet, dass die Tragplatten (3) im Bereich der horizontalen Symmetrieebene mit einer vertikal geradlinig verlaufenden Erweiterung (4) versehen sind, an welche eine vertikal und axial verlaufende Befestigungsplatte (15) angeschweisst ist, dass mit der Befestigungsplatte (15) horizontalachsige Rohrstücke (14) verschweisst sind, und dass diese Rohrstücke (14) wiederum mit dem Gehäuseunterteil (8) verschweisst sind.

2. Maschine nach Anspruch 1, dadurch gekennzeichnet, dass die Tragplatten (3) an ihrem inneren Umfang Aussparungen (6') für die sichere Lagerung der Befestigungskeile (6) aufweisen, und sich die Befestigungskeile auf in Aussparungen (7') der Oberfläche des Statorblechpakets (1) angeordneten Pressbolzen (7) abstützen und mit letzteren verschweisst ist.

3. Maschine nach Anspruch 1 oder 2, dadurch gekennzeichnet, dass im Innern des Gehäuseunter- und Oberteils (8, 9) und senkrecht zu diesem versteifende Querwände (20) angeordnet sind.

**Claims**

1. Electric machine with horizontal axis, having a stack of stator laminations (1) which is clamped by means of fastening wedges (6) distributed over its entire circumference in at least two annular support plates (3) which are vertical and mutually spaced apart, which support plates, in turn, are connected to the casing base (8) of the machine via fastening parts (5) in the area of the horizontal plane of symmetry of the machine, characterized in that the support plates (3) are provided, in the area of the horizontal plane of symmetry, with an expansion (4) which vertically extends in a straight line and to which a vertically and axially extending fastening plate (15) is welded, that pipe sections (14) with horizontal axis are welded to the fastening plate (15), and that these pipe sections (14), in turn, are welded to the casing base (8).

2. Machine according to Claim 1, characterized in that the support plates (3) exhibit recesses (6') for the reliable support of the fastening wedges (6) at their inner circumference and that the fastening wedges are supported on pressure bolts (7) arranged in recesses (7') of the surface of the stack of stator laminations (1) and are welded to the pressure bolts.

3. Machine according to Claim 1 or 2, characterized in that stiffening cross-walls (20) are arranged in the interior of the casing base and top (8, 9) and vertically with respect to the latter.

**Revendications**

1. Machine électrique à axe horizontal avec un paquet de tôles statoriques (1), qui est serré dans au moins deux plaques porteuses annulaires (3), verticales et espacées l'une de l'autre, au moyen de clavettes de fixation (6) réparties sur toute sa pérphérie, lesquelles plaques porteuses sont à leur tour attachées à la partie inférieure (8) de la carcasse de la machine par l'intermédiaire de pièces de fixation (5) dans la région du plan de symétrie horizontal de la machine, caractérisée en ce que les plaques porteuses (3) sont pourvues dans la région du plan de symétrice horizontal d'une zone élargie (4), orientée verticalement, à laquelle est fixée par soudage une plaque de fixation (15) s'étendant verticalement et axialement, en ce que des morceaux de tube (14) à axe horizontal sont soudés à la plaque de fixation (15) et en ce que ces morceaux de tube (14) sont également soudés à la partie inférieure (8) de la carcasse.

2. Machine électrique suivant la revendication 1, caractérisée en ce que les plaques porteuses (3) présentent à leur périphérie intérieure des évidements (6') pour la pose stable des clavettes de fixation (6), et en ce que les clavettes de fixation s'appuyent sur des barreaux d'appui (7) logés dans des évidements (7') ménagés dans la surface du paquet de tôles statoriques (1) et sont soudées à ces derniers.

3. Machine suivant la revendication 1 ou 2, caractérisée en ce que des parois transversales (19) de renforcement sont disposées à l'intérieur des parties inférieure (8) et supérieure (9) de la carcasse et perpendiculairement à celles-ci.

FIG.1

FIG.2

FIG.3

FIG.4

FIG.5

FIG.6